Europäisches Patentamt

European Patent Office

Office européen des brevets

(19)

(11) **EP 1 119 521 B1**

(12) **FASCICULE DE BREVET EUROPEEN**

| | |
|---|---|
| (45) Date de publication et mention de la délivrance du brevet:<br>**05.06.2002 Bulletin 2002/23** | (51) Int Cl.$^7$: **C01F 7/14** |
| (21) Numéro de dépôt: **99936726.1** | (86) Numéro de dépôt international:<br>**PCT/FR99/01975** |
| (22) Date de dépôt: **12.08.1999** | (87) Numéro de publication internationale:<br>**WO 00/14015 (16.03.2000 Gazette 2000/11)** |

(54) **PROCEDE DE CONTROLE GRANULOMETRIQUE DANS UNE CHAINE DE DECOMPOSITION DU CIRCUIT BAYER, INCLUANT UNE PHASE D'AGGLOMERATION**

VERFAHREN ZUR STEUERUNG DER KORNGRÖSSENVERTEILUNG IN EINER EINE AGGLOMERATIONSSTUFE ENTHALTENDEN ZERSETZUNGSREIHE EINES BAYERPROZESSES

METHOD FOR PARTICLE SIZE DISTRIBUTION CONTROL IN A BAYER CIRCUIT DECOMPOSITION CHAIN, COMPRISING AN AGGLOMERATION PHASE

| | |
|---|---|
| (84) Etats contractants désignés:<br>**AT BE CH CY DE DK ES FI FR GB GR IE IT LI LU MC NL PT SE** | (72) Inventeur: **CRISTOL, Benoît**<br>**F-13006 Marseille (FR)** |
| (30) Priorité: **02.09.1998 FR 9811111** | (74) Mandataire: **Marsolais, Richard**<br>**Péchiney,**<br>**Immeuble "SIS"**<br>**217, cours Lafayette**<br>**69451 Lyon Cedex 06 (FR)** |
| (43) Date de publication de la demande:<br>**01.08.2001 Bulletin 2001/31** | |
| (73) Titulaire: **ALUMINIUM PECHINEY**<br>**75218 Paris Cedex 16 (FR)** | (56) Documents cités:<br>**EP-A- 0 247 951**    **EP-A- 0 271 104**<br>**WO-A-85/01040**    **FR-A- 2 591 581**<br>**FR-A- 2 709 302** |

## Description

## DOMAINE TECHNIQUE

L'invention concerne la précipitation du trihydrate d'alumine selon le procédé Bayer, s'effectuant dans une chaîne de décomposition de type américain, incluant une phase préliminaire d'agglomération.

## ETAT DE LA TECHNIQUE

Le procédé Bayer permet de produire de l'alumine à partir de minerai de bauxite, notamment de l'alumine destinée à être transformée en aluminium par électrolyse ignée. Selon ce procédé, le minerai de bauxite est traité à chaud au moyen d'une solution aqueuse d'hydroxyde de sodium, à concentration appropriée, permettant d'obtenir une suspension contenant de la liqueur sursaturée d'aluminate de sodium et des résidus insolubles. Après séparation de ces résidus, la liqueur sursaturée d'aluminate de sodium, appelée aussi liqueur de Bayer, est décomposée par ensemencement avec des particules de trihydroxyde d'aluminium recyclé, jusqu'à obtention de grains de trihydroxyde d'aluminium, appelé également trihydrate d'alumine ou encore hydrargillite, qui sont eux-mêmes ensuite calcinés pour obtenir une alumine possédant une granulométrie et des propriétés physico-chimiques particulières. La liqueur d'aluminate de sodium appauvrie en alumine est alors recyclée pour attaquer le minerai, après avoir été éventuellement concentrée, par évaporation et ajout d' hydroxyde de sodium, ou soude caustique.

La productivité de la liqueur lors de sa décomposition est définie par la quantité d'alumine restituée sous forme de trihydrate d'alumine par décomposition de la liqueur sursaturée, rapportée à un volume donné de liqueur sursaturée. La productivité, exprimée en kilogrammes d'alumine par mètre cube de liqueur (kg $Al_2O_3/m^3$), est liée à la concentration en soude caustique de la liqueur sursaturée. En général, cette concentration, voisine de 100-130 g Na20/I dans les procédés Bayer de type américain, est moins élevée que dans les procédés Bayer de type européen et ceci explique pourquoi une productivité à la décomposition de la liqueur sursaturée est considérée comme bonne lorsqu'elle dépasse 70 kg $Al_2O_3/m^3$ pour un procédé Bayer de type américain et lorsqu'elle dépasse 80 kg $Al_2O_3/m^3$ pour un procédé Bayer de type européen.

Les procédés Bayer de type européen et de type américain diffèrent également par la teneur en matière sèche de la suspension au cours de la décomposition. La suspension résulte de l'introduction d'amorce recyclée de trihydrate d'alumine dans la liqueur d'aluminate ainsi que du passage vers la phase solide d'une partie de l'alumine en solution. Nous définirons ici la teneur en matière sèche de la suspension par le poids des particules solides présentes dans la suspension par unité de volume de liqueur d'aluminate saturé entrant dans l'atelier de décomposition (et non par unité de volume de suspension).

L'alumine destinée à être transformée en aluminium par électrolyse ignée doit présenter un certain nombre de propriétés parmi lesquelles on peut relever :

- une bonne coulabilité de façon à pouvoir alimenter en continu les cuves d'électrolyse avec des quantités contrôlées d'alumine,
- une cinétique de dissolution élevée
- une faible tendance à l'empoussièrement.

Ces propriétés sont fortement liées à la morphologie et la répartition granulométrique des grains d'alumine, elles-mêmes fortement liées à la morphologie et la répartition granulométrique des particules d'hydrargillite formées au cours de la décomposition. Il est important notamment de limiter la proportion de particules très fines, que l'on classe en deux catégories principales : les fines ( dont le diamètre moyen est compris entre 10 à 50 μm) et les ultrafines, dont le diamètre moyen est inférieur à 10 μm. Comme on constate une bonne corrélation entre la répartition granulométrique de l'alumine et celle de l'hydrate de production dont elle est issue, on cherche à contrôler la granulométrie de l'hydrate en roulement dans la série de décomposition, plus particulièrement dans la phase de nourrissement. Ainsi, par exemple, pour obtenir une alumine " métallurgique " de bonne qualité, on cherche à obtenir un hydrate en roulement dont le passant à 45 μm est inférieur à 10%, c'est-à-dire une suspension possédant moins de 10% de particules dont le diamètre est inférieur à 45 pm. Par la suite, nous noterons le passant à X micromètres : " %<X "

En ce qui concerne le procédé Bayer de type américain, la décomposition comprend une phase préliminaire d'agglomération, caractérisée par une teneur en matière sèche particulièrement faible. Dans le brevet US 4 234 559, le circuit de décomposition comprend en premier lieu une série de bacs d'agglomération, puis une série de bacs de nourrissement et enfin trois bacs de classement (primaire, secondaire, tertiaire). Alors que l'hydrate produit est issu de la sous-verse du bac de classement primaire, l'amorce de fines, provenant de la sous-verse du bac de classement tertiaire, est introduite en quantité contrôlée dans la série de bacs d'agglomération et l'amorce plus grosse, provenant de la sous-verse du bac de classement secondaire est introduite dans la série de bacs de nourrissement. Les fines étant détruites au cours de la phase d'agglomération, le problème du contrôle de la répartition granulométrique de l'hydrate produit ne se pose pas.

Mais on cherche toujours à augmenter la productivité du procédé Bayer de type américain, dont le niveau est inférieur à celui des cycles Bayer de type européen. Dans US 5 158 577 et EP 0 515 407, seulement une partie de la liqueur sursaturée est introduite dans la chaîne d'agglomération, le reste est introduit directement au nourrissement. Ceci permet d'obtenir des teneurs en matière sèche différentes dans ces deux parties de la décomposition une faible teneur en matière sèche dans les bacs d'agglomération, qui est indispensable si l'on veut que l'agglomération se produise dans de bonnes conditions, et une forte teneur en matière sèche dans les bacs de nourrissement, ce qui permet d'augmenter la productivité.

Mais, en augmentant la teneur en matière sèche au nourrissement, et en limitant le nombre de bacs agglomérateurs, on observe une instabilité de la décomposition avec un risque important d'apparition brutale de fines en grande quantité dans l'hydrate en roulement (crise granulométrique). De telles crises sont à éviter, car, si l'on n'y remédie pas, la qualité granulométrique de l'hydrate produit est fortement dégradée.

L'instabilité granulométrique provient de la diminution du rapport entre la somme de la production et de l'amorce fine vers agglomération d'une part et l'hydrate en roulement d'autre part. La diminution de ce rapport ne permet pas de mettre en oeuvre des actions correctives efficaces lorsqu'une dérive du passant à 45μm (%<45) est observée sur l'hydrate en roulement.

## PROBLEME POSE

La demanderesse a donc cherché à définir un procédé qui permette d'augmenter la productivité du procédé Bayer de type américain tout en prévenant les fluctuations granulométriques inacceptables, notamment l'apparition brutale de grandes quantités de fines et ultrafines dans l'hydrate en roulement.

## OBJET DE L'INVENTION

Le procédé mis au point par la demanderesse est un procédé de conduite de la décomposition d'un circuit BAYER de type américain, incluant une phase préliminaire d'agglomération, une phase de nourrissement et une phase de classification, dans lequel la qualité granulométrique de l'hydrate produit est suivie par une mesure du passant à $X2$ μm de l'hydrate en roulement dans les bacs nourrisseurs, caractérisé en ce qu'il comporte:

a) une étape de préparation, réalisée une fois pour toutes, destinée d'une part à établir une relation R, en intensité et en temps, entre le passant à $X1$ um et le passant à $X2$ μm dans l'hydrate en roulement, où $X1$ est strictement inférieur à $X2$ et d'autre part à définir, à partir de l'intervalle de variation maximale autorisée sur les valeurs du passant à $X2$ μm, des seuils déclencheurs sur la valeur du passant à $X1$ μm ;

b) la conduite du procédé proprement dite, effectuée pendant toute la durée de fonctionnement de l'installation, qui comporte, outre la mesure journalière du passant à $X2$ μm et la mise à jour régulière de la corrélation entre ledit passant à $X2$ μm et la répartition granulométrique de l'hydrate produit, une mesure journalière du passant à $X1$ μm de l'hydrate en roulement et la mise à jour régulière de la relation R entre ledit passant à $X1$ pm et ledit passant à $X2$ μm, ainsi que le déclenchement d'une action correctrice sur la suspension en tête de décomposition lorsque la valeur mesurée du passant à $X1$ μm atteint un des seuils déclencheurs qui ont été établis au cours de l'étape préliminaire et ont été mis à jour régulièrement.

Cette action correctrice dans la suspension en tête de décomposition peut être une modification de la température de la liqueur d'aluminate introduite dans ie bac d'agglomération, l'ajout en tête de nourrissement d'additifs tels que les " Crystal Growth Modifier" décrits dans US 4 737 352, le recyclage d'une partie de la suspension de fin de décomposition ou encore, de préférence, la modification de la teneur en matière sèche de la suspension dans le premier bac d'agglomération.

La modification de la teneur en matière sèche de la suspension en phase d'agglomération peut être menée simplement en alimentant plus ou moins le premier bac d'agglomération en liqueur d'aluminate sursaturé, l'aliquote restante étant dirigée vers le bac nourrisseur. Si le passant à $X1$ μm est trop fort, il y a trop de fines : il faut augmenter l'alimentation du bac agglomérateur en liqueur d'aluminate sursaturé. Si le passant à $X1$ μm est trop faible, il y a un risque de chute de la productivité : il faut diminuer l'alimentation du bac agglomérsteur en liqueur d'aluminate sursaturé.

L'étape préliminaire, réalisée une fois pour toutes, est destinée à établir la relation R et les seuils déclencheurs des valeurs de $X1$ μm qui serviront au début de la mise en application de la conduite du procédé. Cette étape préliminaire comprend les étapes suivantes :

a1) Une mesure journalière du passant à $X1$ μm dans la suspension en un point particulier de la chaîne de décomposition, conduisant à l'établissement d'un premier chronogramme granulométrique, représenté par une courbe $Y=\%<X1(t)$.

a2) Une mesure journalière du passant à $X2$ μm dans la suspension en un point particulier de la chaîne de décomposition, conduisant à l'établissement d'un deuxième chronogramme granulométrique, représenté par une courbe $Y=\%<X2(t)$ et où $X2$, supérieure à $X1$, est une valeur déjà connue pour sa bonne corrélation avec la répartition granulométrique de l'hydrate produit. Il s'agit par exemple du passant à 45 μm mesuré dans la suspension en fin de nourrissement (" pump-off ").

a3) L'établissement d'une relation empirique entre les deux chronogrammes granulométriques, qui a pour but de caractériser, en intensité et en temps, le lien entre l'évolution de la population du passant à X1 µm et l'évolution de la population du passant à X2 µm. Cette relation R peut se mettre sous la forme :

$$R(\%<X2(t), \%<X1\ (t-\tau))=0$$

où t est la date de la mesure du passant à X2 µm et τ un intervalle de temps caractéristique, estimé en observant la manifestation d'un même phénomène accidentel sur chacune des courbes (un extremum de même type, une inflexion, etc....)
a4) La définition du seuil maximum et du seuil mini du passant à X1 µm, obtenue à partir de la relation R établie précédemment et de l'intervalle de variation maximale autorisée sur les valeurs du passant à X2 µm.

Le but de la relation R est de prévoir l'évolution de la répartition granulométrique, c'est-à-dire d'anticiper les crises, en observant l'évolution de la population des particules d'hydrate les plus fines (dont la taille est inférieure à X1 µm). La demanderesse a constaté que le passant à X1 µm montre une évolution anticipée du passant à une valeur X2 plus élevée : un accident sur le chronogramme %<X1(t) se retrouve, amplifié et décalé dans le temps sur le chronogramme %<X2(t). Le décalage temporel " τ " est d'autant plus fort que l'écart entre X1 et X2 est important. Dans la pratique, on choisira une valeur X2 supérieure à 40 µm (habituellement, 45 µm) et une valeur X inférieure ou égale à 20 µm.

Le point de mesure est de préférence en fin de nourrissement mais il peut s'effectuer plus en amont, à condition de rester dans la série de nourrissement. Les points de mesure pour le passant à X1 et le passant à X2 peuvent être différents. Par contre, ils doivent impérativement rester les mêmes tout au long de la conduite du procédé et être éloignés le plus possible de points où l'on effectue de façon irrégulière des ajouts perturbateurs dans la suspension.

Les mesures dites journalières sont des mesures régulières, pas forcément quotidiennes mais suffisamment fréquentes pour pouvoir obtenir des chronogrammes exploitables.

En ce qui concerne l'intervalle de variation souhaité du passant à X2 µm, on définit un maximum au-delà duquel on sait que la répartition granulométrique de l'hydrate produit n'est plus satisfaisante (trop de fines) et un mini en dessous duquel on sait que les conditions économiques d'exploitation deviennent mauvaises.

Les seuils déclencheurs sont ainsi déduits du chronogramme du passant à X1 pm, en tenant compte non seulement de l'intervalle de variation maximale autorisée sur les valeurs du passant à X2 µm, mais aussi de l'incertitude de la mesure sur le passant à X1 µm et de la stabilité de l'efficacité du système de classement de l'hydrate

Cette étape préparatoire, au bout de laquelle les chronogrammes, la relation R et les seuils déclencheurs deviennent opérationnels est de l'ordre de trois mois. Mais il est possible d'accélérer cette étape soit en déclenchant volontairement une création excédentaire de fines, soit en analysant les résultats granulométriques antérieurs s'ils comportent les informations requises sur les passants à X1 et X2 µm.

Comme la décomposition est un phénomène complexe dépendant d'une multitude de paramètres (notamment la composition de la bauxite traitée qui peut évoluer dans le temps), au lieu d'utiliser une relation R établie une fois pour toutes, il est préférable d'utiliser une relation mise à jour régulièrement. De même, la corrélation entre la valeur du passant à X2 µm et la répartition granulométrique de l'hydrate produit doit être mise à jour régulièrement. Cette mise à jour régulière peut suivre un rythme moins fréquent que celui des mesures journalières (mensuel par exemple).

La conduite proprement dite du procédé comprend les phases suivantes :

b1) Une mesure journalière du passant à X1 µm dans la suspension en un point particulier de la chaîne de décomposition, permettant de compléter le premier chronogramme granulométrique, représenté par une courbe Y=%<X1(t).
b2) Une mesure journalière du passant à X2 µm dans la suspension en un point particulier de la chaîne de décomposition, permettant de compléter le deuxième chronogramme granulométrique, représenté par une courbe Y=%<X2(t)
b3) La mise à jour régulière, mensuelle par exemple, ou après modification importante d'un paramètre du process, de la relation empirique R entre les deux chronogrammes granulométriques et de la définition des seuils déclencheurs du passant à X1 µm
b4) le déclenchement d'une action correctrice sur la suspension en tête de décomposition lorsque la valeur mesurée du passant à X1 µm atteint un des seuils définis en b3).

Cette action correctrice est de préférence la modification de la teneur en matière sèche de la suspension dans le premier bac d'agglomération. S'il s'agit d'un seuil maxi, il y a trop de fines, on diminue la teneur en matière sèche en introduisant un plus forte aliquote de la liqueur d'aluminate sursaturé dans le premier agglomérateur. S'il s'agit d'un seuil mini, on diminue l'alimentation du bac agglomérateur en liqueur d'aluminate sursaturé et on augmente l'alimentation des bacs nourrisseurs.

Comme pour l'étape préparatoire, les relations empiriques sont établies à partir de mesures granulométriques journalières effectuées sur l'hydrate en roulement. Comme pour l'étape préparatoire, le rythme journalier n'est pas forcément quotidien mais suffisamment fréquent pour pouvoir établir des chronogrammes exploitables. Les seuils déclencheurs sur la courbe " passant à X1 µm" sont également déduits du chronogramme granulométrique; ils tiennent compte de l'incertitude de la mesure du passant à X1, de l'intervalle de variation maximale autorisée sur les valeurs du passant à X2 µm et de la stabilité de l'efficacité du système de classement de l'hydrate.

Pour des teneurs en matière sèche relativement faibles (≈350 g/l aluminate), la mesure du passant à X1 = 20 µm suffit. Elle peut être réalisée à l'aide d'appareils qui utilisent la diffraction des rayons lasers et permettent de faire des déterminations en masse (Mastersizer de Malvern, Cilas, ...).

Mais pour augmenter la productivité, il faut viser des teneurs en matière sèche beaucoup plus élevées, comparables à celles du procédé de type européen, c'est-à-dire supérieures à 700 g/l aluminate. Or, plus la teneur en matière sèche est forte dans les bacs nourrisseurs, plus on a besoin d'avoir une valeur de X1 faible. En effet, lorsque la matière sèche est élevée les perturbations granulométriques nécessitent plus de temps pour être corrigées ; on doit donc disposer d'un le décalage temporel τ plus important; et ce décalage est proportionnel à l'écart entre X1 et X2.

Il est dans ce cas préférable de mesurer un passant à 10 µm, voire à une valeur encore plus faible (jusqu'à 1,5 µm). Lorsque X1 devient aussi faible, le recours à une mesure celloscopique (COULTER ou ELZONE), qui permet de faire des déterminations en nombre et non en masse, devient nécessaire. Ces mesures sont plus délicates mais les conséquences économiques sont négligeables

Pour augmenter la productivité, il est possible également d'augmenter la teneur en soude caustique de la liqueur d'aluminate. La demanderesse a constaté sur des installations industrielles que la présente démarche de contrôle granulométrique s'appliquait parfaitement avec des concentrations atteignant 160 g Na2O/ l.

En ce qui concerne l'action correctrice, il est recommandé également d'établir au préalable une relation empirique quantifiant les effets de ladite action, par exemple pendant la phase préparatoire. Ainsi, pour quantifier les effets de la modification de la teneur en matière sèche dans le premier bac agglomérateur, on établira au préalable la relation existant entre ladite teneur en matière sèche et la proportion de fines détruites.

## MODES DE REALISATION DE L'INVENTION - EXEMPLES

La réalisation de l'invention sera mieux comprise à partir de la description des exemples qui suivent.

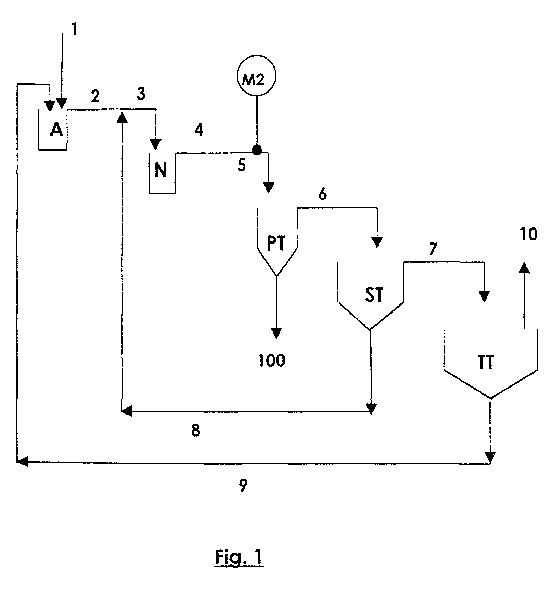

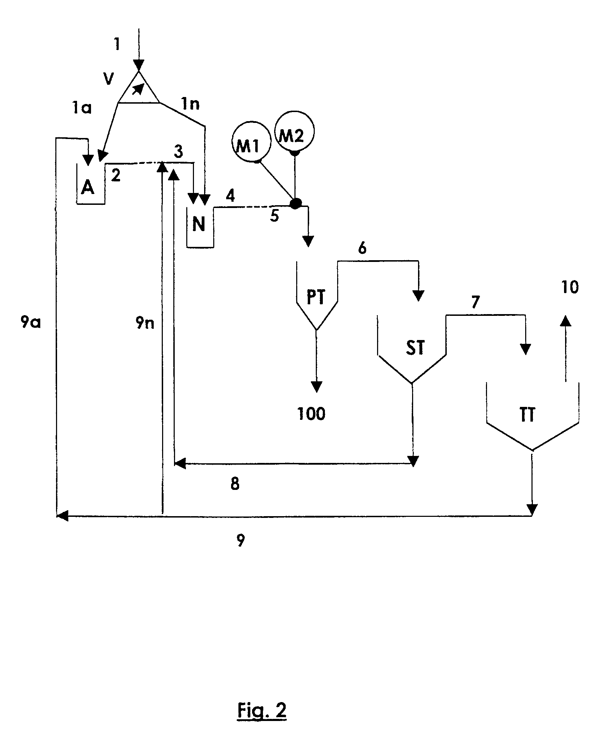

Les figures 1 et 2 représentent la partie du circuit Bayer correspondant à la phase de décomposition, cette dernière étant de type américain, avec une étape d'agglomération préliminaire.

La figure 1 sert d'illustration au premier exemple, typique de l'art antérieur.

La figure 2 sert d'illustration aux exemples suivants, décrivant deux modalités de la présente invention.

Ces modalités sont décrites dans les exemples 2 et 3. Pour simplifier la présentation, nous avons illustré la phase de classement avec l'ensemble de dispositifs de classification classique de l'exemple 1. En fait, et notamment avec l'augmentation de la teneur en matière sèche, l'homme du métier peut choisir d'autres dispositifs, en complément ou en remplacement, tels que des cyclones ou des filtres.

### EXEMPLE 1 ( Art antérieur)

La liqueur d'aluminate sursaturée **1,** arrivant dans le circuit de décomposition à une température voisine de 75°C, est introduite dans le premier bac d'agglomération **A**. Elle a une concentration en soude caustique de 130 g Na2O/l.

L'amorce tertiaire **9**, essentiellement composée de particules fines et ultrafines est introduite dans le premier bac d'agglomération **A** et mélangée à la liqueur sursaturée. La suspension **2** qui en résulte suit une succession de bacs agglomérateurs de telle sorte qu'après un temps de séjour moyen d'environ 5 heures, la quasi-totalité des fines et ultrafines a disparu. Au cours de la phase d'agglomération la teneur en matière sèche de la suspension est passée de 20 g/l aluminate à environ 30 g/l aluminate.

En sortant de la série d'agglomération, la suspension **3** est introduite dans le premier bac nourrisseur **N** avec l'amorce secondaire **8**, dont l'apport augmente la teneur en matière sèche de 80 g/l aluminate. La nouvelle suspension **4** suit une succession de bacs nourrisseurs avec temps de séjour moyen d'environ 20 heures et un refroidissement d'environ 5°C. En sortie de nourrissement, la suspension **5,** appelée " pump-off ", contient environ 175 g/l aluminate de matière sèche . En mesurant le passant à 45 µm de cette suspension **5** en sortie de nourrissement **M1**, on estime la qualité granulométrique de l'hydrate de production, ce qui permet de définir de définir un intervalle de variation optimal pour ce passant à 45 µm. Dans les conditions de l'exemple, un passant à 45 µm de l'ordre de 10% permet de donner une alumine " métallurgique " de bonne qualité.

La suspension **5** en sortie de nourrissement est introduite dans un premier bac classificateur **PT**. La sous-verse **100** du premier classificateur **PT** fournit l'hydrate de production et la surverse **6,** dont la teneur en matière sèche est de 100 g/l aluminate, est introduite dans un second bac classificateur **ST**. La sous-verse du deuxième bac classificateur **ST** sert d'amorce secondaire 8 qui est réintroduite en début de nourrissement **N** et la surverse **7**, dont la teneur en matière sèche n'est plus que de 20 g/l, est dirigée vers un troisième bac classificateur **TT**. La surverse **10** du troisième bac classificateur est la liqueur d'aluminate appauvrie qui est réintroduite comme liqueur d'attaque de la bauxite au début du cycle Bayer, après concentration par évaporation et ajout de soude. La sous-verse **9** du troisième bac classificateur est réintroduite comme amorce tertiaire dans le premier bac d'agglomération **A** après filtration et lavage.

## EXEMPLE 2: Décomposition selon l'invention avec une teneur moyenne en matière sèche dans l'hydrate en roulement

La liqueur d'aluminate sursaturée **1,** arrivant dans le circuit de décomposition à une température voisine de 75°C, est séparée en deux aliquotes, la première **1a**, représentant environ le tiers de la liqueur totale, est introduite dans le premier bac d'agglomération **A**, la seconde **1n** est introduite dans le premier bac nourrisseur **N**. La liqueur d'aluminate sursaturée **1** a une concentration en soude caustique de 130 g Na2O/l.

L'amorce tertiaire **9a**, essentiellement composée de particules fines et ultrafines est introduite après filtration et lavage partiel ou total, dans le premier bac d'agglomération **A** et mélangée à la liqueur sursaturée. La suspension **2** qui en résulte suit une succession de bacs agglomérateurs de telle sorte qu'après un temps de séjour moyen de 5 heures, une proportion prédéfinie des fines et ultrafines a disparu. Au cours de la phase d'agglomération la quantité d'hydrate est augmentée de 10 g/l d'aluminate entrant dans l'atelier (1a et 1n).

En sortant de la série d'agglomération, la suspension **3** est introduite dans le premier bac nourrisseur **N** avec la deuxième aliquote **1n** de liqueur d'aluminate sursaturée, le reste de l'amorce tertiaire, lavée ou non, **9n** et l'amorce secondaire **8**, dont l'apport augmente la teneur en matière sèche de 220 g/l aluminate. La nouvelle suspension **4** suit une succession de bacs nourrisseurs avec temps de séjour moyen de 20 heures et un refroidissement de 5 °C. En sortie de nourrissement, la suspension **5,** contient environ 350 g/l aluminate de matière sèche.

La suspension **5** en sortie de nourrissement est introduite dans un premier bac classificateur **PT**. La sous-verse **100** du premier classificateur **PT** fournit l'hydrate de production et la surverse **6,** dont la teneur en matière sèche est de 250 g/l aluminate, est introduite dans un second bac classificateur **ST**. La sous-verse du deuxième bac classificateur **ST** sert d'amorce secondaire **8** qui est réintroduite en début de nourrissement **N** et la surverse **7**, dont la teneur en matière sèche n'est plus que de 30 g/l, est dirigée vers le troisième bac classificateur **TT**.

Tous les jours, on effectue au niveau de la suspension en fin de nourrissement une mesure **M1** du passant à 45 µm et une mesure **M2** du passant à 20 µm avec un appareil à diffraction laser.

L'observation de la qualité granulométrique de l'hydrate produit permet de définir l'intervalle de variation autorisé sur les valeurs du passant à 45 µm et, grâce à la relation empirique établie au cours de la phase préparatoire et continuellement mise à jour depuis, entre le passant à 20 µm et le passant à 45 µm, on définit la valeur de consigne C visée sur le passant à 20 µm.

En fonction de la différence entre M2 et la valeur de consigne C prédéfinie pour garantir la qualité granulométrique du produit ainsi que des différences M2 - C obtenues les jours précédents, on détermine la quantité de fines que l'on doit agglomérer en plus ou en moins au cours de la prochaine journée.

Au cours de la phase préparatoire, on a établi la relation existant entre la teneur en matière sèche dans la phase d'agglomération et la proportion de fines détruites. Connaissant cette relation, on fixe l'aliquote **1a** allant à l'agglomération. Cette aliquote **1a** fixe la teneur en matière sèche dans les agglomérateurs donc le changement souhaité pour la destruction de fines.

Par ailleurs, à partir des mesures **M1** et **M2** effectuées les jours précédents, on ajuste la relation entre la valeur de consigne C et le niveau M1 souhaité pour le passant à 45 µm d'une part, la relation entre teneur en matière sèche et fines détruites à l'agglomération d'autre part.

## EXEMPLE 3: Décomposition selon l'invention avec une teneur élevée en matière sèche dans l'hydrate en roulement

La liqueur d'aluminate sursaturée **1,** arrivant dans le circuit de décomposition à une température voisine de 75°C, est séparée en deux aliquotes, la première **1a**, représentant environ la moitié de la liqueur totale, est introduite dans le premier bac d'agglomération **A,** la seconde **1n** est introduite dans le premier bac nourrisseur **N.** La liqueur sursaturée **1a** une concentration en soude caustique de 130 g Na2O/l.

L'amorce tertiaire **9** filtrée, essentiellement composée de particules fines et ultrafines, est introduite , dans l'étape d'agglomération **A** et mélangée à la fraction 1a de la liqueur sursaturée. La suspension **2** qui en résulte séjourne environ 5 heures dans la phase d'agglomération. La proportion entre la quantité d'amorce tertiaire et le débit de liqueur la est réglé de telle sorte qu'une proportion prédéfinie des fines et ultrafines disparaisse. Au cours de la phase d'agglomération la quantité d'hydrate est augmentée de 15 g/l d'aluminate entrant dans l'atelier **(1a** et **1n).**

En sortant de la série d'agglomération, la suspension **3** est introduite dans le premier bac nourrisseur **N** avec la deuxième aliquote **1n** de liqueur d'aiuminate sursaturée et l'amorce secondaire **8,** dont l'apport augmente la teneur en matière sèche de 840 g/l aluminate. La nouvelle suspension **4** suit une succession de bacs nourrisseurs avec temps de séjour moyen de 18 heures et un refroidissement de **10** °**C**. En sortie de nourrissement, la suspension **5**, contient environ 1000 g/l aluminate de matière sèche.

Tous les jours, on effectue à ce niveau au moins une mesure **M1** du passant à 45 μm avec un appareil à diffraction laser et une mesure **M2** du passant à 1,5 μm avec un compteur ELZONE.

La suspension **5** en sortie de nourrissement est introduite dans un premier bac classificateur **PT**. La sous-verse **100** du premier classificateur **PT** fournit l'hydrate de production et la surverse **6,** dont la teneur en matière sèche est de 870 g/l aluminate, est introduite dans un second bac classificateur **ST**. La sous-verse du deuxième bac classificateur **ST** sert d'amorce secondaire **8** qui est réintroduite en début de nourrissement **N** après filtration et la surverse **7**, dont la teneur en matière sèche n'est plus que de 30 g/l, est dirigée vers le troisième bac classificateur **TT**.

Le procédé de suivi et de contrôle granulométrique de l'hydrate en roulement dans la suspension en fin de nourrissement est identique à celui présenté dans l'exemple 2.

**AVANTAGES DU PROCEDE SELON L'INVENTION**

• On évite les fluctuations granulométriques liées à l'augmentation d'inertie du système provenant de la montée des matières sèches.

• On peut ainsi augmenter la productivité des liqueurs

  - en faisant fonctionner la cristallisation à forte matières sèches sans mettre en péril la qualité de l'alumine produite
  - en réglant la granulométrie du 'pump-off' au niveau maximum compatible avec les exigences de qualité et le système de classement de la production

**Revendications**

**1.** Procédé de conduite de la décomposition d'un circuit BAYER, incluant une phase préliminaire d'agglomération (A), une phase de nourrissement (N) et une phase de classification (PT; ST; TT), dans lequel la qualité granulométrique de l'hydrate produit est suivie par une mesure (M2) du passant à X2 μm de l'hydrate en roulement dans les bacs nourrisseurs, **caractérisé en ce qu'**il comporte :

  a) une étape de préparation, réalisée une fois pour toutes, destinée d'une part à établir une relation R, en intensité et en temps, entre le passant à X1 μm et le passant à X2 μm dans l'hydrate en roulement, où X1 est strictement inférieur à X2 et d'autre part à définir, à partir de l'intervalle de variation maximale autorisée sur les valeurs du passant à X2 μm, des seuils déclencheurs sur la valeur du passant à X1

μm ;

  b) la conduite du procédé proprement dite, effectuée pendant toute la durée de fonctionnement de l'installation, qui comporte, outre la mesure journalière (M2) du passant à X2 μm et la mise à jour régulière de la corrélation entre ledit passant à X2 μm et la répartition granulométrique de l'hydrate produit, une mesure journalière (M1) du passant à X1 μm de l'hydrate en roulement et la mise à jour régulière de la relation R entre ledit passant à X1 μm et ledit passant à X2 μm, ainsi que le déclenchement d'une action correctrice sur la suspension en tête de décomposition lorsque la valeur mesurée du passant à X1 μm atteint un des seuils déclencheurs qui ont été établis au cours de l'étape préliminaire et ont été mis à jour régulièrement.

**2.** Procédé de conduite de la décomposition d'un circuit BAYER selon la revendication 1, **caractérisé en ce que** ladite action correctrice comporte la modification de la teneur en matière sèche de la suspension en tête de décomposition.

**3.** Procédé de conduite de la décomposition d'un circuit BAYER selon la revendication 2, selon lequel la modification de la teneur en matière sèche de la suspension en tête de décomposition est réalisée en modifiant les proportions des aliquotes (1a) et (1b) de la liqueur d'aluminate sursaturée (1) alimentant respectivement le premier bac agglomérateur (A) et le premier bac nourrisseur (N).

**4.** Procédé de conduite de la décomposition d'un circuit BAYER selon l'une quelconque des revendications 1 à 3, **caractérisé en ce que** X2 est supérieur à 40 μm et X1 est inférieur à 20 μm.

**5.** Procédé de conduite de la décomposition d'un circuit BAYER selon l'une quelconque des revendications 1 à 4, **caractérisé en ce que** les mesures de passant à X1 μm et X2 μm sont effectuées sur la suspension (5) en fin de nourrissement.

**6.** Procédé de conduite de la décomposition d'un circuit BAYER selon l'une quelconque des revendications 1 à 5, **caractérisé en ce que** la concentration de la liqueur d'aluminate sursaturée (1) est inférieure ou égale à 160 g Na2O/l.

**Claims**

**1.** Process for controlling the precipitation of a BAYER circuit including a preliminary agglomeration phase (A), a crystal growth phase (N) and a classification phase (PT; ST; TT), in which the particle size quality of the hydrate produced is monitored by making a measurement (M2) of the amount of rotating hydrate in the feed tanks, **characterized in that** it comprises:

a) a preparation step carried out once and for all, intended firstly to setup a relation R in intensity and in time between the rotating hydrate material passing X1 µm and material passing X2 µm, where X1 is less than X2, and secondly to define trigger thresholds on the value of material passing X1 µm, starting from the maximum authorized variation interval on values passing X2 µm;

b) control of the process itself, carried out during the installation operating period which, apart from the daily measurement (M2) of material passing X2 µm and a regular update of the correlation between the said material passing X2 µm and the particle size of the hydrate produced, a daily measurement (M1) of the rotating hydrate passing X1 µm and a regular update of the relation R between the said material passing X1 µm and the said material passing X2 µm, and triggering of corrective action on the slurry at the beginning of the precipitation when the measured value of material passing X1 µm reaches one of the regularly updated trigger thresholds determined in the previous step.

2. Process for controlling the precipitation of a BAYER circuit according to claim 1, **characterized in that** the said corrective action includes modification of the solid content in the slurry at the beginning of the precipitation.

3. Process for controlling the precipitation of the BAYER circuit according to claim 2, in which the modification in the solid content in the slurry at the beginning of the precipitation is achieved by modifying the proportions of aliquots (1a) and (1n) of the pregnant aluminate liquor (1) feeding the first agglomeration tank (A) and the first feed tank (N), respectively.

4. Process for controlling the precipitation of a BAYER circuit according to one of claims 1 to 3, **characterized in that** X2 is greater than 40 µm and X1 is less than 20 µm.

5. Process for controlling the precipitation of a BAYER circuit according to any one of claims 1 to 4, **characterized in that** the measurements of material passing X1 µm and X2 µm are made on the slurry (5) at pump-off.

6. Process for controlling the precipitation of a BAYER circuit according to one of claims 1 to 5, **characterized in that** the concentration of pregnant aluminate liquor (1) is less than or equal to 160 g of Na2O/liter.

## Patentansprüche

1. Verfahren zur Steuerung der Zersetzung in einem Bayer-Kreislaufprozess, welche Zersetzung eine einleitende Agglomerationsphase (A), eine wachstumsfördernde Nährphase (N) und eine Klassierungsphase (PT; ST; TT) einschließt, bei dem die Korngrößenverteilung des gewonnenen Hydrats durch eine Messung (M2) des Siebdurchgangs bei X2 µm des rückgeführten Hydrats in den Nährgefäßen überwacht wird, **dadurch gekennzeichnet, dass** es umfasst:

a) eine Vorbereitungsstufe, die ein für allemal durchgeführt wird und dazu bestimmt ist, zum einen eine intensitäts- und zeitbezogene Beziehung R zwischen dem Siebdurchgang bei X1 µm und dem Siebdurchgang bei X2 im rückgeführten Hydrat herzustellen, wobei X1 strikt kleiner ist als X2, und zum anderen aus dem maximal zulässigen Schwankungsintervall für die Werte des Siebdurchgangs bei X2 µm Auslöseschwellen für den Wert des Siebdurchgangs bei X1 µm zu bestimmen;

b) die eigentliche Steuerung des Verfahrens, die während der gesamten Betriebszeit der Anlage durchgeführt wird und umfasst, neben der täglichen Messung (M2) des Siebdurchgangs bei X2 µm und der regelmäßigen Aktualisierung der Korrelation zwischen dem Siebdurchang bei X2 µm und der Korngrößenverteilung des gewonnen Hydrats, eine tägliche Messung (M1) des Siebdurchgangs bei X1 µm des rückgeführten Hydrats und eine regelmäßige Aktualisierung der Beziehung R zwischen dem Siebdurchgang bei X1 µm und dem Siebdurchgang bei X2 µm sowie die Auslösung einer korrigierenden Einwirkung auf die Suspension jeweils in der die Zersetzung einleitenden Stufe, wenn der gemessene Wert des Siebdurchgangs bei X1 µm eine der Auslöseschwellen erreicht, die während der Vorbereitungsstufe bestimmt und regelmäßig aktualisiert wurden.

2. Verfahren zur Steuerung der Zersetzung in einem Bayer-Kreislaufprozess nach Anspruch 1, **dadurch gekennzeichnet, dass** die korrigierende Einwirkung die Änderung des Trockensubstanzgehaltes der Suspension jeweils in der die Zersetzung einleitenden Stufe umfasst.

**3.** Verfahren zur Steuerung der Zersetzung in einem Bayer-Kreislaufprozess nach Anspruch 2, **dadurch gekennzeichnet, dass** die Änderung des Trockensubstanzgehaltes der Suspension jeweils in der die Zersetzung einleitenden Stufe dadurch erfolgt, dass die Proportionen der aliquoten Teile (1a) und (1n) der übersättigten Aluminatlösung, welche jeweils das erste Agglomerationsgefäß (A) und das erste Nährgefäß (N) versorgt, geändert wird.

**4.** Verfahren zur Steuerung der Zersetzung in einem Bayer-Kreislaufprozess nach einem der Ansprüche 1 bis 3, **dadurch gekennzeichnet, dass** X2 größer 40 $\mu$m und X1 kleiner 20 $\mu$m ist.

**5.** Verfahren zur Steuerung der Zersetzung in einem Bayer-Kreislaufprozess nach einem der Ansprüche 1 bis 4, **dadurch gekennzeichnet dass** die Messungen des Siebdurchgangs bei X1 $\mu$m und X2 $\mu$m an der Suspension (5) jeweils am Ende der wachstumsfördernden Nährphase durchgeführt werden.

**6.** Verfahren zur Steuerung der Zersetzung in einem Bayer-Kreislaufprozess nach einem der Ansprüche 1 bis 5, **dadurch gekennzeichnet, dass** die Konzentration der übersättigten Aluminatlösung (1) kleiner oder gleich 160 g $Na_2O/l$ ist.

**Fig. 1**

**Fig. 2**